# EUROPEAN PATENT SPECIFICATION

(11) **EP 0 366 443 B1**
(45) Date of publication and mention of the grant of the patent: **04.08.1993**
(21) Application number: 89310997.5
(22) Date of filing: 25.10.1989
(51) Int. Cl.: C04B 35/58, F16C 33/30

(54) **Ceramic bearing components and method of manufacture thereof**
Keramische Lagerteile und Methode zu deren Herstellung
Composants de paliers en céramique et mèthode pour leur production

(30) Priority: 25.10.1988 JP 268695/88
(43) Date of publication of application: 02.05.1990
(73) Proprietor: KABUSHIKI KAISHA TOSHIBA, Kawasaki-shi, Kanagawa-ken 210 (JP)
(72) Inventor: Inoue, Koichi c/o Intellectual Property Division, Tokyo (JP); Ohta, Hiroyasu c/o Intellectual Property Division, Tokyo (JP); Onishi, Youzi c/o Intellectual Property Division, Tokyo (JP)
(74) Representative: BATCHELLOR, KIRK & CO.

(56) References cited:
- EP-A- 0 178 169
- EP-A- 0 231 130
- US-A- 4 097 372
- JOURNAL OF THE AMERICAN CERAMIC SOCIETY, vol. 68, no. 3, March 1985, pages C-83 - C-84, Columbus, Ohio, US; G.M. CROSBIE: "Ion-Exchange Treatment of Silicon-Yttria Dispersions"

## Description

This invention relates to ceramic components and methods of manufacturing them and, in particular, relates to ceramic bearing components which are wear-resistant and have, e.g., a sliding and/or a rolling function or other bearing action, such as plain or ball bearings, cams for e.g. engine camshafts.

In recent years, due to the excellent properties of ceramic materials, such as wear resistance, heat resistance and acid resistance, attempts have been made to apply them as sliding members of various types. For example, it is hoped to use ball bearings made of ceramic material in various types of machinery. Compared with ball bearings made of metal, seizure does not occur in ceramic bearings even if lubricating oil is lost during operation, and ceramic bearings have excellent resistance to wear. Previously, ceramic materials constituting such sliding members were mainly made of silicon nitride, silicon carbide, alumina, or titanium nitride ceramic materials, on account of their excellent mechanical strength. Also various methods of manufacturing bearing components using these ceramic materials have been put into practice. For example, ball bearings were formed, first of all, by mixing the prescribed raw material ceramic powder with a binder and shaping the mixture by prescribed means. This product is then baked, any necessary subsequent processing is then carried out.

In bearing components, such as ball bearings, obtained by this conventional method, it has been found that, after a short period of use, spalling of material at the surface of the ball bearing often occurs. Such spalling is fatal to a ceramic sliding component, causes problems in stability of quality and reliability of the component.

EP-A-0 231 130 describes a silicon nitride ceramic component in which the amount of metallic constituent consisting of iron, aluminium, calcium and magnesium is 500 ppm or less.

This invention was made after consideration of the above problems of the prior art. Its object is to provide a ceramic bearing component a method of manufacture thereof, an apparatus comprising a bearing component and a bearing assembly whereby the component has a stable quality minimising potential defects, such as spalling.

A ceramic bearing component according to this invention is characterised in that it is a rolling bearing and that the metallic constituent comprises more than one of the following elements: Fe, Ni, Cr and W.

Furthermore, the method of manufacturing a ceramic sliding component according to this invention may comprise converting a raw material ceramic powder into a slurry, granulating the slurry, forming the slurry to the prescribed shape, and then baking the shaped product. As part of the method, metallic constituents are essentially removed in at least one of said steps.

In order that the invention may be illustrated and readily carried into effect, preferred embodiments thereof will now be described by way of example only with reference to the accompanying drawing wherein:

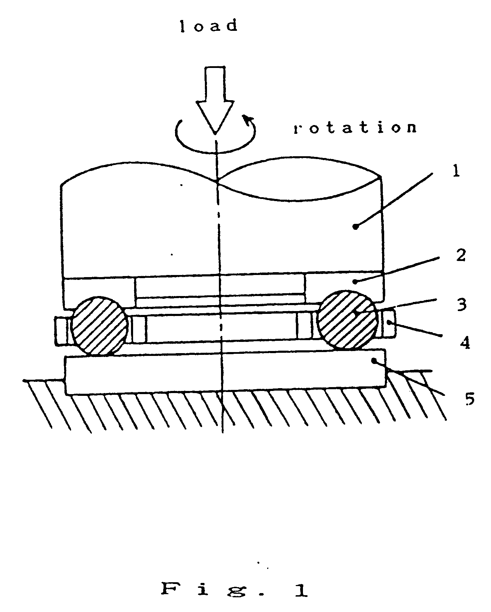

Figure 1 is a cross-sectional view showing the construction of a test machine for performing a rolling fatigue life measurement.

Investigations were carried out in which the surface of sliding components on which spalling had occurred during use was analysed using an X-ray micro-analyzer. As a result, a large quantity of iron (Fe) in the regions of the spalling was detected. Noting this fact, further investigation showed that the unavoidable presence of iron in the raw material ceramic material caused some sort of aggregation phenomenon, nucleated by these grains of iron, on baking. This resulted in the formation of agglomerates of about 30 to 100 µm in the surface layer. These segregated at the component surface. These agglomerates had a significant tendency to spalling and to separates as scales under mechanical stress, lowering the quality of the bearing component.

This invention is based on the above discovery. It is characterised in that positive steps are taken to remove a substantial portion and possibly the major portion of metallic constituents that are unavoidably present in the ceramic material, causing spalling as described above. It should be noted that the above-described spalling at the surface layer of the component occurs not only with iron, but also with other metallic constituents, such as Cr, Ni, and W, and can occur in the presence of metal compounds, such as WC. Such metal compounds are therefore also included as "metallic constituents" within the scope of this invention.

Conventional ceramic materials can be used as ceramic material for ceramic bearing components of this invention. Specifically, depending on the application, use may be made of silicon nitride, silicon carbide, alumina, or titanium nitride ceramic materials, and mixtures of these.

When the ceramic bearing component of this invention is manufactured, usually a method will be adopted wherein the ceramic bearing component is obtained by converting the raw material ceramic powder into slurry form, granulating this, forming to the prescribed shape, and then baking. Removal of the metallic constituent to the specified level remaining can be performed in at least one of said steps.

Positive removal of the metallic constituent may be performed by, for example, after converting the raw material ceramic powder into slurry form, filtering said slurry using a screen filler fitted, i.e., associated, with a magnet.

Also, according to the invention, metallic constituents can be removed in the raw material stage before converting the raw material ceramic powder into slurry form by bringing the raw material ceramic powder into contact with a magnet.

At least one of the above-described methods is preferably performed in the method, or two or more such methods can be combined. In this invention, metallic constituents in the ceramic material are essentially "eliminated" using the above-mentioned methods. In order to essentially suppress the above-described spalling, it is preferable that the content of metallic constituents remaining in the material after removal is restricted to less than or equal to 3500 ppm, and even more preferably less than 300 ppm.

In particular, it is preferable that the content of iron is restricted to less than 2000 ppm, and even more preferably to less than 200 ppm.

The invention is described below with reference to actual examples of manufacture.

### EMBODIMENT 1

A raw material ceramic powder was prepared in the weight ratio: Si₃N₄ : 100 parts, Y₂O₃ : 5 parts, Al₂O₃ : 4 parts, AlN : 3 parts, and TiO : 1.5 parts. The raw material slurry was then prepared by mixing with liquid medium and binder, and stirring.

Next, this slurry was filtered, using a screen with an electromagnet mounted at its periphery. Next, this filtrate was granulated by the spray drying method, and the granules obtained were formed under pressure. After this, the binder which had been added was decomposed and sublimated by heating in an electric furnace, and baking was then performed. A bearing component (ball bearing), in which the content of iron had been reduced to below 2000 ppm, was obtained by subjecting the baked product obtained to some abrasive machining in accordance with requirements.

The rolling fatigue life of the ball bearings of the invention that were thus obtained, and of conventional ball bearings, were measured (as seen in Figure 1). The life of the conventional ball bearings was an average of 400 hours with a minimum of 50 hours. However, in the case of the ball bearings of this invention, the average was 420 hours with a minimum of 300 hours. Measurement was performed under the conditions: load 400 kg, speed of rotation 1200 rpm, ball diameter 10 mm, with the ball bearings (3) rolling on a disc of SUJ-2* joined on top of the axis 1 and on a disc 5 of SUJ-2* and rolling in the holding part 4.
* SUJ-2 is a high carbon chromium bearing steel, described in Japanese Industrial Standard J1S G 4805.

As can be seen from the results of the rolling fatigue life measurement described above, the ceramic sliding member of this invention shows an outstanding reduction in variation of rolling fatigue life, which means a dramatic improvement in quality.

### EMBODIMENT 2

Three kinds of ball bearings were made by using the same material and the same method in EMBODIMENT 1 (Figure 1). As shown in Table 1, the amounts of their metallic constituent and iron constituent can be obtained. The rolling fatigue life of ball bearings of the invention was measured. The results are also shown in Table 1. Measurement was performed under the conditions: load 400 kg. speed of rotation 1200 rpm, ball diameter 10 mm, with the ball bearings (3) rolling on a disc 2 of SUJ-2 joined on top of the axis 1 and on a disc 5 of SUJ-2 and rolling in the holding 4.

**TABLE 1**

| Number | Amount of metallic constituents | Amount of FE constituent | Rolling Fatigue Life | | | number of test |
|---|---|---|---|---|---|---|
| | | | maximum (hour) | minimum (hour) | average (hour) | |
| 1 (COMPARATIVE) | 7650 ppm | 3820 ppm | 470 | 50 | 400 | 10 |
| 2 | 3330 ppm | 1960 ppm | 550 | 320 | 420 | 10 |
| 3 | 270 ppm | 180 ppm | 600 | 380 | 460 | 10 |

As can be seen from the results of the rolling fatigue life measurement described in Table 1, ceramic bearing components of this invention can be effectively prevented from spalling on the surface of the sliding component, thereby obtaining unexpectedly improved stability of product quality.

## Claims

1. A bearing component formed of ceramic material and having a metallic constituent in an amount of 3500 ppm or less, characterised in that it is a rolling bearing and that the metallic constituent comprises more than one of the following elements: Fe, Ni, Cr and W.

2. A bearing component as claimed in claim 1 wherein the metallic constituent includes: Fe, Ni, Cr and W.

3. A bearing as claimed in claim 1 or 2, wherein the amount of metallic constituent is 300 ppm or less.

4. A bearing as claimed in any preceding claim, wherein the metallic constituent includes iron which is present in an amount of less than or equal to 2000 ppm.

5. A bearing as claimed in claim 4, wherein the iron is present in amount of less than or equal to 200 ppm.

6. A bearing as claimed in any preceding claim, wherein said ceramic material comprises silicon nitride.

7. A bearing component as claimed in any preceding claim, in the form of a ball bearing.

8. An apparatus comprising a bearing component, wherein at least one bearing therein comprises a bearing as claimed in any preceding claim, or comprising a bearing assembly as claimed in claim 14.

9. A method of making a ceramic rolling bearing component comprising:
converting raw material ceramic powder into slurry form, then granulating the slurry, forming the slurry to a desired shape, and baking, to obtain the rolling bearing component, the method including a removal step whereby metallic constituent comprising at least one of Fe, Ni, Cr and W is removed to a level of 3500 ppm or less remaining in the bearing component.

10. A method according to claim 9, wherein, after converting the raw material ceramic powder into a slurry, said slurry is filtered using a screen associated with a magnet thereby removing said metallic constituent in the slurry.

11. A method according to claim 9 or 10, wherein, before converting the raw material ceramic powder into a slurry, said raw material ceramic powder is brought into contact with a magnet so that the metallic constituent in the raw material ceramic powder is thereby selectively removed.

12. A method according to any one of claims 9 to 11, wherein, after granulating said slurry, the granules are brought into contact with a magnet, thereby selectively removing metallic constituent on the granulate.

13. A method as claimed in any one of claims 9 to 12, as applied to the manufacture of a bearing component as claimed in any one of claims 1 to 7.

14. A bearing assembly comprising a plurality of assembled bearing components as claimed in any one of claims 1 to 7.

## Patentansprüche

1. Lagerbaustein, der aus keramischem Material gebildet wird, das einen Gehalt an metallischen Bestandteilen in einer Menge von 3500 ppm oder weniger hat, **dadurch gekennzeichnet,** daß es sich um ein Wälzlager handelt und daß der Gehalt an metallischen Bestandteilen mehr als eines der folgenden Elemente umfaßt: Fe, Ni, Cr und W.

2. Lagerbaustein nach Anspruch 1, bei welchem die metallischen Bestandteile beinhalten: Fe, Ni, Cr und W.

3. Lager nach Anspruch 1 oder 2, bei welchem die Menge des Gehalts an metallischen Bestandteilen 300 ppm oder geringer ist.

4. Lager nach irgendeinem der vorstehenden Ansprüche, bei welchem der Gehalt an metallischen Bestandteilen Eisen einschließt, das in Mengen von weniger als oder gleich 2000 ppm vorhanden ist.

5. Lager nach Anspruch 4, bei welchem das Eisen in einer Menge von weniger als oder gleich 200 ppm vorhanden ist.

6. Lager nach irgendeinem der vorstehenden Ansprüchet, bei welchem das keramische Material Siliziumnitrit umfaßt.

7. Lager nach irgendeinem der vorstehenden Ansprüche, in der Form eines Kugellagers.

8. Vorrichtung, die einen Lagerbaustein umfaßt, wobei mindestens ein Lager darin Lager umfaßt, wie es in irgendeinem der vorstehenden Ansprüche beansprucht wird oder die eine Lagerbaueinheit umfaßt, wie sie in Anspruch 14 beansprucht wird.

9. Verfahren für die Herstellung eines keramischen Wälzlagerbausteins, welches umfaßt:
das Umwandeln von keramischem Rohmaterialpulver in eine Schlämpenform, das Granulieren der Schlämpe, ein Formen der Schlämpe zu einer gewünschten Gestalt und ein Sintern, um den Wälzlagerbaustein zu erhalten, wobei das Verfahren einen Entfernungsschritt einschließt, durch welchen metallische Bestandteile, die mindestens eines der Elemente Fe, Ni, Cr und W umfassen, auf einen Restwert von 3500 ppm oder weniger in dem Lagerbaustein entfernt wird.

10. Verfahren nach Anspruch 9, bei welchem nach Umwandlung des keramischen Rohmaterialpulvers in eine Schlämpe diese Schlämpe mit Hilfe eines Siebs gefiltert wird, das mit einem Magneten verbunden ist, wodurch der metallische Bestandteil in der Schlämpe entfernt wird.

11. Verfahren nach Anspruch 9 oder 10, bei welchem vor der Umwandlung des keramischen Rohmaterialpulvers in eine Schlämpe das keramische Rohmaterialpulver mit einem Magneten in Kontakt gebracht wird, so daß der metallische Bestandteil in dem keramischen Rohmaterialpulver dadurch selektiv entfernt wird.

12. Verfahren nach irgendeinem der Ansprüche 9 bis 11, bei welchem nach dem Granulieren der Schlämpe das Granulat mit einem Magneten in Kontakt gebracht und dadurch der metallische Bestandteil aus dem Granulat entfernt wird.

13. Verfahren nach irgendeinem der Ansprüche 9 bis 12, angewendet auf die Herstellung eines Lagerbausteins, wie er in irgendeinem der Ansprüche 1 bis 7 beansprucht wird.

14. Lagerbaueinheit, die eine Vielzahl zusammengebauter Lagerbausteine umfaßt, wie sie in irgendeinem der Ansprüche 1 bis 7 beansprucht werden.

## Revendications

1. Composant de palier en une matière céramique et comprenant un constituant métallique dans une proportion de 3500 ppm ou moins, caractérisé en ce qu'il s'agit d'un palier du type "roulement" et en ce que son constituant métallique comprend plus d'un des éléments suivants : Fe, Ni, Cr et W.

2. Composant de palier tel que spécifié dans la revendication 1, caractérisé en ce que le constituant métallique inclut : Fe, Ni, Cr et W.

3. Palier tel que spécifié dans la revendication 1 ou 2, caractérisé en ce que la quantité de constituant métallique est égale ou inférieure à 300 ppm.

4. Palier tel que spécifié dans l'une quelconque des revendications précédentes, caractérisé en ce que le constituant métallique inclut le fer qui est présent dans une proportion égale ou inférieure à 2000 ppm.

5. Palier selon la revendication 4, caractérisé en ce que le fer est présent dans une proportion égale ou inférieure à 200 ppm.

6. Palier selon l'une quelconque des revendications précédentes, caractérisé en ce que ladite matière céramique comprend le nitrure de silicium.

7. Composant de palier tel que spécifié dans l'une quelconque des revendications précédentes, caractérisé en ce qu'il présente la forme d'un roulement à billes.

8. Appareil comprenant un composant palier, caractérisé en ce que l'un, au moins, de ses paliers est un palier tel que spécifié dans l'une quelconque des revendications précédentes ou un ensemble tel que spécifié dans la revendication 14.

9. Procédé pour produire un palier en céramique du type roulement qui consiste :
à convertir une poudre de céramique, en tant que matière première, en une bouillie, puis à granuler cette bouillie, à donner à la bouillie la forme voulue et à la cuire afin d'obtenir un composant de palier-roulement, caractérisé par une étape d'enlèvement dans laquelle on enlève des constituants métalliques comprenant, l'un, au moins, des suivants : Fe, Ni, Cr et W jusqu'à ce qu'il n'en reste plus que 3500 ppm ou moins dans le composant de palier.

10. Procédé selon la revendication 9, caractérisé en ce que, après avoir converti la poudre de céramique crue en une bouillie, on filtre cette bouillie en utilisant un tamis associé à un aimant afin d'éliminer ainsi ledit composant métallique de la bouillie.

11. Procédé selon la revendication 9 ou 10, caractérisé en ce que, avant de convertir la poudre de céramique en une bouillie, on l'amène au contact d'un aimant afin d'en éliminer sélectivement les certains constituants métalliques.

12. Procédé selon l'une quelconque des revendications 9 à 11, caractérisé en ce que, après avoir granulé ladite bouilie, on amène les granules au contact d'un aimant afin d'éliminer ainsi certains constituants métalliques du granulat.

13. Procédé selon l'une quelconque des revendications 9 à 12, caractérisé en ce qu'on procède à la fabrication de composants de paliers, tels que spécifiés dans l'une quelconque des revendications 1 à 7.

14. Ensemble-palier qui comprend un certain nombre de composants assemblés tels que spécifiés dans l'une quelconque des revendications 1 à 7.
